# EUROPÄISCHE PATENTSCHRIFT

(11) **EP 3 771 383 B1**
(45) Veröffentlichungstag und Bekanntmachung des Hinweises auf die Patenterteilung: **07.01.2026**
(21) Anmeldenummer: 20184115.2
(22) Anmeldetag: 06.07.2020
(51) Int. Cl.: A47J 43/07

(54) **KUPPLUNGSWELLE, ROTATIONSWERKZEUGEINRICHTUNG UND GEFÄSS-WERKZEUG-KOMBINATION FÜR EINE KÜCHENMASCHINE SOWIE KÜCHENMASCHINE**
COUPLING SHAFT, ROTARY TOOL DEVICE AND VESSEL TOOL COMBINATION FOR A KITCHEN APPLIANCE AND KITCHEN APPLIANCE
ARBRE D'ACCOUPLEMENT, AGENCEMENT D'OUTIL ROTATIF ET COMBINAISON D'OUTIL DE RÉCIPIENT POUR UN ROBOT DE CUISINE AINSI QUE ROBOT DE CUISINE

(30) Priorität: 30.07.2019 DE 102019211298
(43) Veröffentlichungstag der Anmeldung: 03.02.2021
(73) Patentinhaber: BSH Hausgeräte GmbH, 81739 München (DE)
(72) Erfinder: Berzelak, Matej, 3334 Luce (SI); Rudez, Darko, 3230 Sentjur, Slowenien (SI); Cresnar, Mihael, 3205 Vitanje (SI); Golob, Jakob, 3330 Mozirje (SI); Slakan, Gregor, 1420 Trbovlse (SI); Ursej, Matjaz, 2382 Mislinja (SI)

(56) Entgegenhaltungen:
- WO-A1-2019/092754
- AU-A- 5 617 180
- CN-A- 109 700 337
- DE-A1- 2 461 286
- US-A1- 2018 344 090
- AMAZON: "Milwaukee Akku-Schlagschrauber mit Sprengring", 25 October 2015 (2015-10-25), XP055736389, Retrieved from the Internet <URL:https://www.amazon.de/Milwaukee-Akku-Schlagschrauber-Sprengring-M18FIWF12-Vierkant/dp/B013XCFUKQ> [retrieved on 20201005]

## Beschreibung

Die vorliegende Erfindung betrifft eine Kupplungswelle sowie eine Rotationswerkzeugeinrichtung jeweils für eine Küchenmaschine. Darüber hinaus betrifft die Erfindung eine Gefäß-Werkzeug-Kombination für eine Küchenmaschine und eine Küchenmaschine mit einer Basisstation und einer derartigen Gefäß-Werkzeug-Kombination. Küchenmaschinen stellen eine kompakte und vielseitige Möglichkeit zum Bearbeiten von Lebensmitteln dar. Sie umfassen in der Regel ein Gefäß, in das jeweilige Lebensmittel eingefüllt werden können, sowie eine Basisstation. Ein Gehäuse der Basisstation definiert dann üblicherweise eine vorgesehene Verwendungsposition für das Gefäß. In ihr kann insbesondere ein im Gefäß angeordnetes oder anzuordnendes Rotationswerkzeug an einen Elektromotor in der Basisstation anzukoppeln sein. Damit kann das jeweilige Lebensmittel beispielsweise verrührt, geschlagen oder zerkleinert werden.

Derartige Küchenmaschinen sind aus den Dokumenten DE 2 461 286 A1, AU 5 617 180 A, WO 2019 092 754 A1 und CN 109 700 337 A bekannt.

Zum Verbinden des Rotationswerkzeugs mit dem Elektromotor kann das Gefäß eine Kupplungswelle umfassen, die in einem installierten Zustand insbesondere durch einen Boden bzw. Fuß des Gefäßes hindurchführen kann. Am dabei im Gefäßinneren angeordneten Ende kann dann das Rotationswerkzeug befestigt werden.

Der vorliegenden Erfindung liegt die Aufgabe zugrunde, eine Technik bereitzustellen, die eine verbesserte Verbindung des Rotationswerkzeugs einer Küchenmaschine mit dem Elektromotor einer zugehörigen Basisstation ermöglicht.

Die Aufgabe wird gelöst durch eine Kupplungswelle nach Anspruch 1, eine Rotationswerkzeugeinrichtung gemäß Anspruch 6, eine Gefäß-Werkzeug-Kombination gemäß Anspruch 9 und eine Küchenmaschine nach Anspruch 10. Vorteilhafte Ausführungsformen sind in den Unteransprüchen, der Beschreibung und den Figuren offenbart.

Eine erfindungsgemäße Kupplungswelle dient dazu, eine Rotation auf mindestens ein Rotationswerkzeug einer Küchenmaschine zu übertragen; sie kann in ein Gefäß einer Küchenmaschine eingesetzt oder einzusetzen sein und dort dauerhaft oder lösbar fixiert bzw. fixierbar sein. Dabei kann sie beispielsweise durch einen Boden bzw. einen Fuß des Gefäßes hindurchführen.

Die Kupplungswelle umfasst einen Ankupplungsabschnitt, der dazu eingerichtet ist, mit einer (z.B. mittels eines Elektromotors) rotierbaren Kupplungseinrichtung verbunden zu werden und dann deren jeweilige Rotation aufzunehmen. Darüber hinaus umfasst eine erfindungsgemäße Kupplungswelle einen Mitnehmerabschnitt mit mindestens zwei Mitnehmerflügeln zum Übertragen der (jeweils aufgenommenen) Rotation auf das jeweilige Rotationswerkzeug. Das Rotationswerkzeug kann dabei insbesondere an einem Mitnahmebecher befestigt sein, der über den Mitnahmeabschnitt zu stülpen ist; das Stülpen kann dabei eine Drehbewegung um die vorgesehene Rotationsachse einschließen. Insbesondere kann das Rotationswerkzeug Teil einer erfindungsgemäßen, weiter unten beschriebenen Rotationswerkzeugeinrichtung sein.

In einer vorgesehenen Position (beispielsweise einem Ringspalt) zwischen dem Ankupplungsabschnitt und den mindestens zwei Mitnehmerflügeln ist ein Federring (also ein ringartig geformtes, elastisches Element) der Kupplungswelle angeordnet oder anzuordnen. In dieser Position, in der er vorzugsweise gehaltert, insbesondere in axialer Richtung fixiert ist, ist der Federring seiner Federkraft entgegen nach radial innen komprimierbar, kann also nach innen zusammengedrückt werden. Die Angaben "radial" und "axial" ebenso wie (weiter unten) "Umfangsrichtung" beziehen sich dabei in dieser Schrift stets auf eine vorgesehene Rotationsachse der Kupplungswelle bzw. einer damit zu verbindenden Rotationswerkzeugeinrichtung.

Eine erfindungsgemäße Rotationswerkzeugeinrichtung für eine Küchenmaschine umfasst mindestens ein Rotationswerkzeug zum Bearbeiten (beispielsweise Verrühren, Schlagen und/oder Zerkleinern) von Lebensmittel(n). Darüber hinaus umfasst die Rotationswerkzeugeinrichtung einen Mitnahmebecher, der dazu eingerichtet bzw. geeignet ist, über zumindest den Mitnehmerabschnitt einer erfindungsgemäßen Kupplungswelle gemäß einer der in dieser Schrift offenbarten Ausführungsformen gestülpt zu werden (was wiederum eine Drehung umfassen kann), um dann eine Rotation des Mitnehmerabschnitts auf das mindestens eine Rotationswerkzeug zu übertragen. Derart übergestülpt verrastet der Mitnahmebecher mit dem Federring der Kupplungswelle.

Insbesondere kann der Mitnahmebecher an seiner Innenseite mindestens eine Oberflächenstruktur aufweisen, mit der der Federring zum Verrasten in Wirkverbindung treten kann. Eine derartige Oberflächenstruktur kann beispielsweise mindestens einen in einen Innenraum des Mitnahmebechers hineinragenden Vorsprung (z.B. in Form mindestens einer Rippe und/oder mindestens einer Noppe) umfassen, der dazu eingerichtet ist, beim Überstülpen des Mitnahmebechers den Federring erst dessen Federkraft entgegen zusammenzudrücken und dann wieder mindestens teilweise zu entlasten; insbesondere gleitet ein derartiger Vorsprung beim Überstülpen also vorzugsweise in axialer Richtung über den Federring hinweg. Nach dem Überstülpen wirkt ein derartiger Vorsprung damit als Halteelement für den Mitnahmebecher: Nur durch Aufbringung von Kraft kann der mindestens eine Vorsprung dann erneut (nunmehr in entgegengesetzter Richtung) über den Federring gezogen werden und dabei diesen wiederum zusammendrücken. Die zum Überstülpen und Abnehmen des Mitnahmebechers jeweils erforderliche Kraft ist somit durch die Federkraft und jeweilige Oberflächenwinkel des mindestens einen Vorsprung in Bezug auf eine jeweilige ihn umgebende Oberfläche bestimmt.

Die vorliegende Erfindung ermöglicht somit auf einfache Weise ein lösbares Befestigen einer Rotationswerkzeugeinrichtung an einer Kupplungswelle durch Einsatz eines Federrings, der bei einem Aufsetzen radial nach innen zusammengedrückt wird und in einer vorgesehenen Endposition der Rotationswerkzeugeinrichtung vorzugsweise in eine ihn radial mindestens teilweise umgebende Struktur eingreifen kann. So bleibt die Rotationswerkzeugeinrichtung unabhängig von einer jeweiligen Orientierung der Kupplungswelle an dieser befestigt. Ist die Kupplungswelle in einem Gefäß einer Küchenmaschine angeordnet und fixiert, wird somit insbesondere ein Abfallen der Rotationswerkzeugeinrichtung auch dann verhindert, wenn das Gefäß im Vergleich zu einer vorgesehenen Verwendungsausrichtung umgedreht wird, beispielsweise zum Ausgießen seines jeweiligen Inhalts.

Der Federring ist dabei in seiner Wirkung hitzebeständig auch bei in einer Temperatur von 200°C oder mehr, zudem erlaubt er eine Kombination mit schlichten, leicht zu reinigenden Oberflächenstrukturen sowohl zu seiner Befestigung als auch zu seiner Verbindung mit einer Rotationswerkzeugeinrichtung. Damit ermöglicht er eine besonders hygienische Befestigung.

Vorzugsweise ist der Mitnahmebecher einer erfindungsgemäßen Rotationswerkzeugeinrichtung dazu eingerichtet, beim Verrasten mit dem Federring ein Geräusch zu bewirken, beispielsweise mittels mindestens eines Vorsprungs wie oben erwähnt: Dieser kann dazu eingerichtet sein zu bewirken, dass der Federring bei seiner Entlastung (wenn der Vorsprung über ihn hinübergeglitten ist) an einer Wand des Mitnahmebechers anschlägt.

Zur Verbesserung einer Hörbarkeit des Geräuschs kann im Mitnahmebecher mindestens eine Öffnung (als Schallloch) ausgebildet sein, vorzugsweise in einem Bereich, der in einem übergestülpten Zustand des Mitnahmebechers am Federring oder zu diesem benachbart angeordnet ist. Insbesondere kann dann der Federring durch eine solche Öffnung hindurch sichtbar sein.

An einer Wand des Mitnahmebechers sind in dessen Innerem vorzugsweise mindestens zwei Mitnahmestrukturen angeordnet, die dazu eingerichtet sind, mit entsprechenden Mitnehmerflügeln an der Kupplungswelle in Anlage gebracht zu werden und so deren jeweilige Rotation aufzunehmen. Die Mitnahmestrukturen können dabei insbesondere jeweils entlang einer jeweiligen Helix verlaufen, die sich um die vorgesehene Rotationsachse windet.

Eine erfindungsgemäße Gefäß-Werkzeug-Kombination für eine Küchenmaschine umfasst ein Gefäß, eine erfindungsgemäße Kupplungswelle und eine dazu passende (von der Kupplungswelle also in vorgesehener Weise rotierbare) erfindungsgemäße Rotationswerkzeugeinrichtung jeweils gemäß einer der in dieser Schrift offenbarten Ausführungsformen. Die Kupplungswelle kann dabei an einem Boden bzw. Fuß des Gefäßes eingesetzt (sowie vorzugsweise dauerhaft oder lösbar befestigt) sein oder zumindest werden. Insbesondere kann sie dann durch den Boden bzw. Fuß hindurchführen.

Der Federring einer erfindungsgemäßen Kupplungswelle kann geschlossen oder offen sein; im letzteren Fall wird ein einfaches Auswechseln ermöglicht. Gemäß vorteilhaften Ausführungsformen umfasst eine erfindungsgemäße Kupplungswelle mindestens zwei offene Federringe, die voneinander verschiedene Durchmesser und/oder Federkräfte haben und gegeneinander austauschbar jeweils zwischen dem Ankupplungsabschnitt und den mindestens zwei Mitnehmerflügeln anzuordnen sind. So kann eine jeweilige Solidität der Befestigung variiert werden, beispielsweise nach den jeweiligen Wünschen eines Verwenders oder abhängig vom jeweils zu befestigenden Rotationswerkzeug.

Der Federring besteht mindestens teilweise aus Metall. Insbesondere kann der Federring als ein Sprengring ausgebildet sein.

Die Mitnehmerflügel einer erfindungsgemäßen Kupplungswelle sind vorzugsweise in Umfangsrichtung gleichmäßig verteilt angeordnet. Insbesondere bevorzugt ist eine Ausführungsform einer erfindungsgemäßen Kupplungswelle, die genau drei Mitnehmerflügel umfasst.

Gemäß vorteilhaften Ausführungsformen sind die Mitnehmerflügel an ihren radial äußeren Flügelkanten und/oder an einem oder beiden ihrer axialen Endbereiche abgerundet. Damit ist die Kupplungswelle besonders gut zu reinigen und zu handhaben.

In axialer Richtung können sich die Mitnehmerflügel über eine Länge h erstrecken, die vorzugsweise mindestens 20mm oder mindestens 28mm oder mindestens 33mm beträgt und/oder die höchstens 55mm oder höchstens 48mm oder höchstens 38mm beträgt.

Gemäß vorteilhaften Ausführungsformen einer erfindungsgemäßen Kupplungswelle verläuft eine jeweilige radial äußere Flügelkante der Mitnehmerflügel entlang (einem Abschnitt) einer jeweiligen Helix (also einer jeweiligen zylindrischen Spirale), die sich um die vorgesehene Rotationsachse windet. Dies ermöglicht zum einen ein besonders bequemes Aufsetzen einer jeweiligen Rotationswerkzeugeinrichtung (insbesondere durch Überstülpen eines zu dieser gehörigen Mitnahmebechers), zum anderen eine besonders gute Übertragung eines Drehmoments der Kupplungswelle auf die Rotationswerkzeugeinrichtung. Die zugehörigen Helices sind dabei vorzugsweise kongruent.

Für die Kupplungswelle kann eine bevorzugte (Haupt-) Rotationsrichtung vorgesehen sein. Im Falle linksgängiger Helices folgt eine solche Rotationsrichtung (bezogen auf eine Draufsicht in axialer Richtung vom Mitnehmerabschnitt zum Ankupplungsabschnitt) dem Uhrzeigersinn (also dem mathematisch positiven Drehsinn), im Falle rechtsgängiger Helices ist die (ebenso bestimmte) Rotationsrichtung vorzugsweise dem Uhrzeigersinn entgegen (folgt also dem mathematisch positiven Drehsinn).

Gemäß vorteilhaften Ausführungsformen beträgt ein jeweiliger Steigungswinkel β der Helices, an denen entlang die radial äußeren Flügelkanten der mindestens zwei Mitnehmerflügel jeweils verlaufen, höchstens 87° oder sogar höchstens 83° und/oder beträgt ein derartiger Steigungswinkel mindestens 68°, mindestens 73° oder sogar mindestens 78°.

Im Vergleich zur vorgesehenen Rotationsachse (bzw. einer dazu parallelen Gerade) ist eine jeweiliger radial äußere Flügelkante der mindestens zwei Mitnehmerflügel vorzugsweise um einen Winkel α geneigt, für den gilt 0 < α ≤ 20° oder 5°≤ α ≤ 13° oder sogar 7°≤ α ≤ 11°.

Diese Winkel ermöglichen aufgrund auftretender axialer Komponenten der Drehkräfte eine besonders vorteilhafte Anlage der Mitnehmerflügel an jeweiligen an einer Rotationswerkzeugeinrichtung ausgebildeten Mitnahmestrukturen.

Gemäß vorteilhaften Ausführungsformen einer erfindungsgemäßen Kupplungswelle erstrecken sich die Mitnehmerflügel jeweils von einem Kopfbereich des Mitnehmerabschnitts bis zu einem Sockelbereich des Mitnehmerabschnitts; der Kopfbereich ist dabei an einem dem Ankupplungsabschnitt entgegengesetzten Ende der Kupplungswelle angeordnet. In axialer Richtung erstrecken sich der Kopfbereich und/oder der Sockelbereich vorzugsweise um mindestens 3mm oder sogar mindestens 4mm.

Ein solcher Kopfbereich und/oder derartiger Sockelbereich ermöglichen jeweils eine vorteilhafte radiale Lagerung einer Rotationswerkzeugeinrichtung, insbesondere eines überzustülpenden Mitnahmebechers einer erfindungsgemäßen Rotationswerkzeugeinrichtung (gemäß einer vorteilhaften Ausführungsform). So kann eine hohe Stabilität einer herzustellenden Verbindung mit der Rotationswerkzeugeinrichtung erzielt werden, insbesondere eine Robustheit gegenüber Vibrationseinflüssen und gegenüber auf die Rotationsachse wirkenden Neigungskräften.

Der Mitnahmebecher einer erfindungsgemäßen Rotationswerkzeugeinrichtung ist bei vorteilhaften Ausführungsformen dazu eingerichtet, in einem über eine derartige Kupplungswelle gestülpten Zustand von einem derartigen Kopfbereich und/oder einem derartigen Sockelbereich jeweils radial gelagert zu werden, insbesondere also mindestens bereichsweise an einer Oberfläche des Kopfbereichs bzw. des Sockelbereichs anzuliegen.

Vorzugsweise weist der Kopfbereich einen Durchmesser D₂ auf, für den gilt 7mm ≤ D₂ oder sogar 9mm ≤ D₂ und/oder für den gilt D₂ ≤ 14mm oder sogar D₂ ≤ 12mm. Der Sockelbereich hat vorzugsweise einen Durchmesser D₁, für den gilt 20mm ≤ D₁ oder sogar 27mm ≤ D₁ und/oder für den gilt D₁ ≤ 40mm oder sogar D₁ ≤ 33mm. Die Durchmesser werden dabei jeweils in einer Rotationsebene gemessen, also in einer Ebene, zu der die vorgesehene Rotationsachse orthogonal ist. Insbesondere weist der Kopfbereich vorzugsweise einen kleineren Durchmesser auf als der Sockelbereich. Der Kopfbereich und/oder der Sockelbereich sind/ist vorzugsweise mindestens bereichsweise kreiszylindrisch geformt.

Der Mitnehmerabschnitt einer erfindungsgemäßen Kupplungswelle ist vorzugsweise dem Ankupplungsabschnitt axial entgegengesetzt. Er kann mindestens zwei zusammengesetzte Bauteile umfassen, beispielsweise zumindest einen Abschnitt einer zentralen Wellenstange (die dann auch einen zum Ankupplungsabschnitt gehörigen Abschnitt umfassen kann) und ein auf diese aufgeschobenes und vorzugsweise mit der Wellenstange vernietetes Mitnehmerelement. Ein solches Mitnehmerelement umfasst dann vorzugsweise die Mitnehmerflügel; in entsprechenden Ausführungsformen kann das Mitnehmerelement darüber hinaus den Kopfbereich und/oder den Sockelbereich umfassen.

Derart zusammengesetzte Ausführungsformen erleichtern die Herstellung und ermöglichen eine materialsparende Fertigung, zudem können sie einen Austausch des Mitnehmerelements (z.B. bei Verschleiß) ermöglichen. Vorzugsweise besteht die zentrale Wellenstange mindestens teilweise aus Metall. Das Mitnehmerelement kann mindestens teilweise aus (insbesondere demselben oder einem anderen) Metall und/oder Kunststoff bestehen.

Eine in axialer Richtung gemessene Länge H des Mitnehmerelements beträgt bei derartigen Ausführungsformen vorzugsweise mindestens 25mm, mindestens 35mm oder mindestens 45mm. Vorzugsweise beträgt die Länge H höchstens 70mm, höchstens 60mm oder höchstens 50mm.

Der Federring kann insbesondere in einem Ringspalt angeordnet oder anzuordnen sein; bei Ausführungsformen, bei denen der Mitnehmerabschnitt in der oben genannten Weise zusammengesetzt ist, kann ein solcher Ringspalt in axialer Richtung an einer Seite von dem Mitnehmerelement begrenzt sein.

Gemäß vorteilhaften Ausführungsformen einer erfindungsgemäßen Kupplungswelle weisen deren Mitnehmerflügel jeweils eine bezogen auf eine vorgesehene Rotationsrichtung vordere Oberfläche auf, deren radial äußerer Rand (der insbesondere an eine jeweilige radial äußere Flügelkante angrenzen kann) mindestens bereichsweise in Richtung der vorgesehenen Rotationsrichtung hervorragt. In einem Übergang zu einem solchen Rand hin ist damit bei derartigen Ausführungsformen eine Senke ausgebildet, in die eine Mitnahmestruktur einer Rotationswerkzeugeinrichtung vorteilhaft eingreifen kann. So kann eine besonders große Anlagefläche des jeweiligen Mitnahmeflügels an der jeweiligen Mitnahmestruktur und damit eine besonders gute Belastungsverteilung erreicht werden.

Die Küchenmaschine, für die eine erfindungsgemäße Kupplungswelle, eine erfindungsgemäße Rotationswerkzeugeinrichtung und eine erfindungsgemäße Gefäß-Werkzeug-Kombination jeweils vorgesehen sind, kann jeweils insbesondere eine erfindungsgemäße Küchenmaschine gemäß einer der in dieser Schrift offenbarten Ausführungsformen sein:
Eine solche erfindungsgemäße Küchenmaschine umfasst eine Basisstation und eine erfindungsgemäße Gefäß-Werkzeug-Kombination gemäß einer der in dieser Schrift offenbarten Ausführungsformen. Die Basisstation umfasst einen Elektromotor, mittels dessen die Kupplungswelle der Gefäß-Werkzeug-Kombination rotierbar ist.

Vorzugsweise kann das Gefäß dabei herausnehmbar in einer vorgesehenen Verwendungsposition der Basisstation angeordnet werden. Eine derartige Verwendungsposition kann beispielsweise durch eine Aufnahmemulde in der Basisstation bestimmt sein, in die das Gefäß mindestens teilweise (d.h. mindestens mit einem Abschnitt wie z.B. einem Fuß des Gefäßes) einzusetzen ist.

Gemäß vorteilhaften Ausführungsformen weist die Küchenmaschine eine Heizfunktion auf, ist also dazu eingerichtet/ geeignet, im Gefäß angeordnetes Lebensmittel zu erhitzen. Das Gefäß kann dazu eine Heizeinrichtung umfassen, die (z.B. durch Positionieren des Gefäßes in einer/der vorgesehenen Verwendungsposition) mit einer Schaltung der Basisstation elektrisch zu verbinden sein kann, und/oder die Basisstation selbst kann eine Heizeinrichtung umfassen, deren Hitze dann auf das Gefäß übertragbar ist.

Alternativ oder zusätzlich kann die Küchenmaschine eine elektronische Steuereinrichtung, eine Waage und/oder eine elektronische Anzeigevorrichtung umfassen, die jeweils beispielsweise zumindest teilweise von der Basisstation umfasst sein können. Insbesondere kann die Küchenmaschine als (z.B. voll- oder teilautomatischer) Multifunktionsküchenautomat ausgebildet sein.

Im Folgenden werden bevorzugte Ausführungsbeispiele der Erfindung anhand von Zeichnungen näher erläutert. Es versteht sich, dass die einzelnen Komponenten auch anders kombiniert und/oder geformt sein können als dargestellt. Bezugszeichen für einander entsprechende Elemente sind figurenübergreifend verwendet und werden ggf. nicht für jede Figur neu beschrieben.

Es zeigen schematisch:
- Figur 1:: eine erfindungsgemäße Kupplungswelle gemäß einer exemplarischen Ausführungsform;
- Figur 2:: die Kupplungswelle der Figur 1 in einer anderen Perspektive und mit Kennzeichnungen der Abmessungen
- Figur 3:: die Kupplungswelle der Figur 1 aus einer weiteren Perspektive; und
- Figur 4:: ein Ausführungsbeispiel einer erfindungsgemäßen Gefäß-Werkzeug-Kombination.

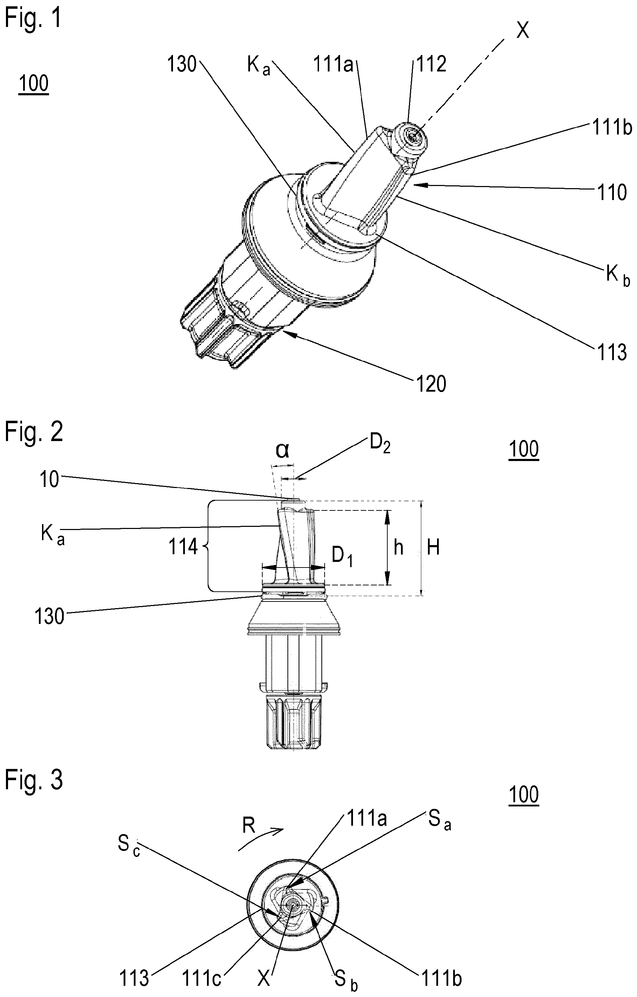

In der Figur 1 ist in perspektivischer Ansicht eine exemplarische Ausführungsform einer erfindungsgemäßen Kupplungswelle 100 mit einer vorgesehenen Rotationsachse X dargestellt.

Die Kupplungswelle 100 umfasst einen Ankupplungsabschnitt 120, der dazu eingerichtet ist, in eine entsprechende (nicht gezeigte), mittels eines Elektromotors rotierbare Kupplungseinrichtung eingesteckt zu werden und so deren jeweilige Rotation aufzunehmen.

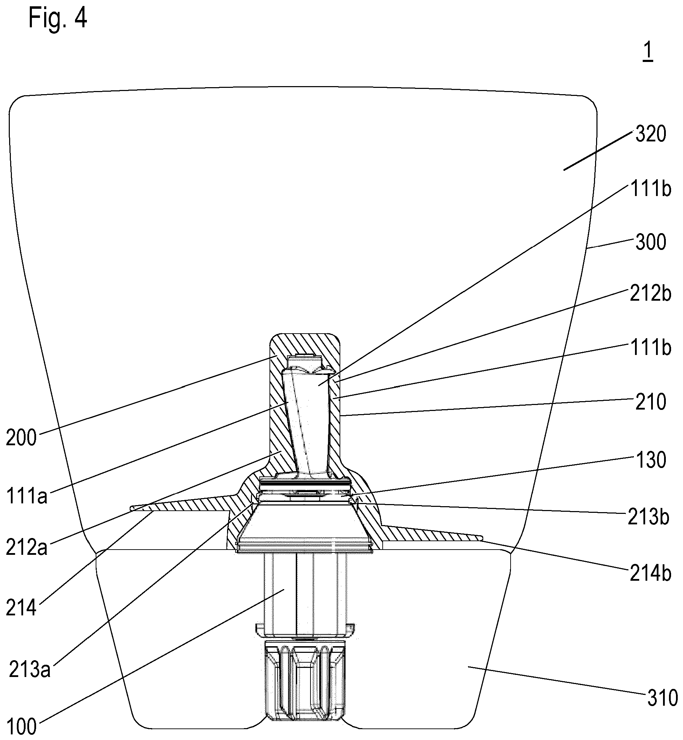

Darüber hinaus umfasst die Kupplungswelle 100 einen Mitnehmerabschnitt 110, der dazu eingerichtet ist, eine jeweilige Rotation der Kupplungswelle 100 auf ein (nicht dargestelltes) Rotationswerkzeug zu übertragen, wenn dieses mit dem Mitnehmerabschnitt 110 verbunden ist. Im vorliegenden Ausführungsbeispiel ist dabei die Kupplungswelle 100 zur Verwendung mit einer erfindungsgemäßen Rotationswerkzeugeinrichtung vorgesehen, deren Mitnahmebecher - wie in Figur 4 gezeigt - insbesondere über den Mitnehmerabschnitt 110 zu stülpen ist.

Zur Übertragung einer Rotation weist der Mitnehmerabschnitt 110 vorliegend drei Mitnehmerflügel auf, von denen aufgrund der Perspektive nur die Mitnehmerflügel 111a, 111b in der Figur 1 sichtbar sind; der dritte Mitnehmerflügel 111c ist in der Figur 3 zu erkennen.

Die Mitnehmerflügel 111a, 111b, 111c sind dazu vorgesehen, an einer entsprechenden Mitnahmestruktur im Inneren eines überzustülpenden Mitnahmebechers einer Rotationswerkzeugeinrichtung anzugreifen und so den Mitnahmebecher und das mindestens eine damit verbundene Rotationswerkzeug zur Rotation zu bringen. Sie erstrecken sich zwischen einem Kopfbereich 112 am dem Ankupplungsbereich 120 entgegengesetzten Ende der Kupplungswelle 100 und einem Sockelbereich 113.

Die (bezogen auf die vorgesehene Rotationsachse X) radial äußeren Flügelkanten der Mitnehmerflügel (von denen in der Figur 1 nur die Flügelkanten Kₐ, K_{b} sichtbar sind) verlaufen jeweils entlang einer die Rotationsachse X umlaufenden, vorliegend linksgängigen Helix; die auf diese Weise zu den Mitnehmerflügeln 111a, 111b, 111c gehörigen Helices sind dabei kongruent.

Schließlich umfasst die Kupplungswelle 100 einen Federring 130, der zwischen dem Ankupplungsabschnitt 120 und den Mitnehmerflügeln 111a, 111b, 111c angeordnet und dort (bezogen auf die vorgesehene Rotationsachse X) nach radial innen komprimierbar ist. So kann ein über auf den Mitnehmerabschnitt 110 überzustülpender Mitnahmebecher einer Rotationswerkzeugeinrichtung mit dem Federring verrasten und damit lösbar (und vorzugsweise hörbar) an der Kupplungswelle 100 fixiert werden.

Wie in der Figur 2 zu entnehmen ist, ist die radial äußere Flügelkante Kₐ im Vergleich zur vorgesehenen Rotationsachse X um einen Winkel α geneigt; vorzugsweise gilt 0 < α ≤ 20° oder 5°≤ α ≤ 13° oder sogar 7°≤ α ≤ 11°.

Der Mitnehmerabschnitt 110 im dargestellten Ausführungsbeispiel zusammengesetzt ausgebildet: Er umfasst einen Abschnitt einer zentralen Wellenstange 10 sowie ein auf dieses aufgeschobenes und mit ihr vorzugsweise vernietetes Mitnehmerelement 114. An diesem sind der Kopfbereich 112, die Mitnehmerflügel 111a, 111b, 111c und der Sockelbereich 113 ausgebildet. In axialer Richtung hat das Mitnehmerelement eine Länge H; wie oben erwähnt, beträgt H vorzugsweise mindestens 25mm, mindestens 35mm oder mindestens 45mm und/oder höchstens 70mm, höchstens 60mm oder höchstens 50mm.

Die Mitnehmerflügel haben dabei in axialer Richtung eine Länge h, die vorzugsweise mindestens 20mm oder mindestens 28mm oder mindestens 33mm beträgt und/oder die höchstens 55mm oder höchstens 48mm oder höchstens 38mm beträgt.

Für den Durchmesser D1 des Sockelbereichs 113 gilt vorzugsweise 20mm ≤ D₁ oder sogar 27mm ≤ D₁ und/oder für den gilt D₁ ≤ 40mm oder sogar D₁ ≤ 33mm. Für den Durchmesser D2 des Kopfbereichs gilt, wie oben erwähnt, vorzugsweise 7mm ≤ D₂ oder sogar 9mm ≤ D₂ und/oder D₂ ≤ 14mm oder sogar D₂ ≤ 12mm

Insbesondere haben sich Ausführungsformen einer erfindungsgemäßen Kupplungswelle als besonders vorteilhaft im Sinne einer Stabilität der Fixierung einer Rotationswerkzeugeinrichtung und einer Drehmomentübertragung erwiesen, die sowohl einen Kopfbereich also auch einen Sockelbereich und ein Mitnehmerelement wie angegeben **umfassen,** und bei denen dann 45mm ≤ H ≤ 50mm sowie 9mm ≤ D₂ ≤ 12mm und 27mm ≤ D₁ ≤ 33mm gilt.

Figur 3 zeigt die Kupplungswelle 100 in einer Draufsicht (in axialer Richtung vom Mitnehmerabschnitt zum Ankupplungsabschnitt), zudem ist in der Figur 3 eine vorgesehene Rotationsrichtung R markiert, die in dieser Ansicht dem Uhrzeigersinn folgt. Eine in dieser Rotationsrichtung jeweils voranrotierende Oberfläche der Mitnehmerflügel 111a, 111b, 111c weist jeweils einen in Richtung der vorgesehenen Rotationsachse R hervorragenden radial äußeren Rand Sₐ, S_{b}, S_{c} auf. Dies ermöglicht eine besonders vorteilhafte Anlagefläche an einer Mitnahmestruktur einer auf den Mitnehmerabschnitt aufzusetzenden Rotationswerkzeugeinrichtung.

Die äußeren Flügelkanten Kₐ, K_{b} der Mitnehmerflügel 111a, 111b, 111c sind beim in den Figuren 1 bis 3 dargestellten Ausführungsbeispiel jeweils abgerundet, ebenso die Übergänge zwischen dem Sockelbereich 113 und den Mitnehmerflügeln sowie zwischen den Mitnehmerflügeln und dem Kopfbereich 112. Dadurch ist die Kupplungswelle besonders gut zu reinigen und zu handhaben.

Die Figur 4 zeigt ein Ausführungsbeispiel einer erfindungsgemäßen Gefäß-Werkzeug-Kombination 1. Diese umfasst eine erfindungsgemäße Kupplungswelle 100, eine erfindungsgemäße Rotationswerkzeugeinrichtung 200 sowie ein Gefäß 300, in das die Kupplungswelle 100 vorliegend eingesetzt ist; vorzugsweise ist die Kupplungswelle 100 dabei lösbar fixiert. Die Kupplungswelle 100 führt dabei durch einen Boden bzw. Fuß 310 des Gefäßes.

Zum Kenntlichmachen sind das Gefäß 300 und die Rotationswerkzeugeinrichtung 200 jeweils in einer Schnittdarstellung gezeigt, wohingegen die Kupplungswelle 100 in einer Seitenansicht dargestellt ist.

In der durch die Figur 4 dargestellten Situation ist der Mitnahmebecher 210 der Rotationswerkzeugeinrichtung 200 im Inneren 320 des Gefäßes 300 über den Mitnehmerabschnitt 110 der Kupplungswelle 100 gestülpt, was vorliegend (aufgrund der Helixform der Flügelkanten der Mitnehmerflügel) eine Drehung einschloss. Derart übergestülpt können im Inneren des Mitnahmebechers (an seiner Becherwand) ausgebildete Mitnahmestrukturen (von denen in der Figur 4 nur die Mitnahmestrukturen 212a, 212b sichtbar sind), an den Mitnehmerflügeln (von denen in der Figur 4 nur die Mitnehmerflügel 111a, 111b sichtbar sind) anliegen und damit deren jeweilige Rotation (sofern vorhanden) übernehmen. Damit rotieren auch die Rotationswerkzeuge 214a, 214b. Im vorliegenden Ausführungsbeispiel verlaufen die Mitnahmestrukturen 212a, 212b jeweils entlang einer Helix, die kongruent zu den Helices ist, entlang denen die Flügelkanten der Mitnehmerflügel verlaufen.

Der Mitnahmebecher 210 ist in der gezeigten Situation mit dem Federring 130 der Kupplungswelle mittels Oberflächenstrukturen 213a, 213b an der Innenseite des Mitnahmebechers 210 verrastet.

Gemäß vorteilhaften Ausführungsformen weist der Mitnahmebecher 210 im Bereich der Oberflächenstrukturen 213a, 213b mindestens eine Öffnung (ein Schallloch) auf (nicht dargestellt), die eine Hörbarkeit des Verrastens verbessert.

Offenbart ist eine Kupplungswelle 100 für eine Küchenmaschine. Die Kupplungswelle umfasst einen Ankupplungsabschnitt 120 zum Aufnehmen einer Rotation, einen Mitnehmerabschnitt 110 mit mindestens zwei Mitnehmerflügeln 111a, 111b, 111c zum Übertragen der aufgenommenen Rotation auf mindestens ein Rotationswerkzeug und einen nach radial innen komprimierbaren Federring zum Verrasten mit einem mit dem Rotationswerkzeug verbundenen Mitnahmebecher.

Offenbart ist ferner eine Rotationswerkzeugeinrichtung mit mindestens einem Rotationswerkzeug 214a, 214b und einem Mitnahmebecher 210 zum Überstülpen über den Mitnehmerabschnitt 110 und den Federring 130 einer solchen Kupplungswelle 100.

Weiterhin offenbart sind eine Gefäß-Werkzeug-Kombination 1 und eine Küchenmaschine.

### Bezugszeichen

- 1: Gefäß-Werkzeug-Kombination

- 10: zentrale Wellenstange

- 100: Kupplungswelle
- 110: Mitnehmerabschnitt
- 111a, 111b, 111c: Mitnehmerflügel
- 112: Kopfbereich
- 113: Sockelbereich
- 114: Mitnehmerelement

- 120: Ankupplungsabschnitt

- 130: Federring

- 200: Rotationswerkzeugeinrichtung
- 210: Mitnahmebecher
- 213a, 213b: Oberflächenstruktur
- 214a, 214b: Rotationswerkzeug

- 300: Gefäß
- 310: Boden des Gefäßes
- 320: Inneres des Gefäßes

- α: Winkel, um den die radial äußeren Flügelkanten Kₐ, K_{b} im Vergleich zur vorgesehenen Rotationsachse X geneigt sind

- D1: Durchmesser des Kopfbereichs 112
- D2: Durchmesser des Sockelbereichs 113
- h: axiale Länge der Mitnehmerflügel 111a, 111b, 111 c
- H: axiale Länge des Mitnehmerelements 114
- Kₐ, K_{b}: Flügelkanten
- R: vorgesehene Rotationsrichtung
- Sₐ, S_{b}, S_{c}: radial äußeren Rand einer voranrotierenden Oberfläche der Mitnehmerflügel

- X: vorgesehene Rotationsachse

## Patentansprüche

1. Kupplungswelle (100) für eine Küchenmaschine, wobei die Kupplungswelle umfasst:
- zum Aufnehmen einer Rotation einen Ankupplungsabschnitt (120), der dazu eingerichtet ist, mit einer rotierbaren Kupplungseinrichtung verbunden zu werden;
- zum Übertragen der Rotation auf mindestens ein Rotationswerkzeug einen Mitnehmerabschnitt (110) mit mindestens zwei Mitnehmerflügeln (111a, 111b, 111c) und
- einen Federring (130), der zwischen dem Ankupplungsabschnitt (120) und den mindestens zwei Mitnehmerflügeln (111a, 111b, 111c) angeordnet oder anzuordnen ist, und der dort seiner Federkraft entgegen nach radial innen komprimierbar ist und der dazu eingerichtet ist, mit einem mit dem Rotationswerkzeug verbundenen Mitnahmebecher zu verrasten, **dadurch gekennzeichnet, dass** der Federring (130) mindestens teilweise aus Metall besteht.

2. Kupplungswelle gemäß Anspruch 1, wobei eine jeweilige radial äußerer Flügelkante (Ka, Kb) der Mitnehmerflügel jeweils entlang einer sich um eine vorgesehene Rotationsachse (X) windenden Helix verläuft.

3. Kupplungswelle gemäß Anspruch 1 oder 2, wobei eine/die jeweilige radial äußere Flügelkante (Ka, Kb) der mindestens zwei Mitnehmerflügel (111a, 111b, 111c) im Vergleich zur vorgesehenen Rotationsachse (X) um einen Winkel α geneigt ist, für den gilt 0 < α ≤ 20° oder 5°≤ α ≤ 13° oder sogar 7°≤ α ≤ 11°.

4. Kupplungswelle gemäß einem der vorherigen Ansprüche, wobei die mindestens zwei Mitnehmerflügel sich jeweils von einem Kopfbereich (112) an einem dem Ankupplungsabschnitt (120) entgegengesetzten Ende der Kupplungswelle bis zu einem Sockelbereich (113) des Mitnehmerabschnitts (110) erstrecken, wobei ein Durchmesser D₂ des Kopfbereichs (112) kleiner ist als ein Durchmesser D₁ des Sockelbereichs (113).

5. Kupplungswelle gemäß einem der vorhergehenden Ansprüche, wobei die mindestens zwei Mitnehmerflügel (111a, 111b, 111c) jeweils eine bezogen auf eine vorgesehene Rotationsrichtung (R) vordere Oberfläche aufweisen, deren radial äußerer Rand mindestens bereichsweise in Richtung der vorgesehenen Rotationsrichtung hervorragt.

6. Rotationswerkzeugeinrichtung (200) für eine Küchenmaschine, wobei die Rotationswerkzeugeinrichtung mindestens ein Rotationswerkzeug (214a, 214b) zum Bearbeiten von Lebensmittel sowie einen Mitnahmebecher (210) zum Überstülpen über zumindest den Mitnehmerabschnitt (110) und den Federring (130) einer Kupplungswelle (100) gemäß einem der vorhergehenden Ansprüche umfasst,
wobei der Mitnahmebecher (210) dazu eingerichtet ist, in einem über den Mitnehmerabschnitt und den Federring übergestülpten Zustand eine Rotation des Mitnehmerabschnitts auf das mindestens eine Rotationswerkzeug (214a, 214b) zu übertragen sowie lösbar mit dem Federring (130) zu verrasten.

7. Rotationswerkzeugeinrichtung gemäß Anspruch 6, wobei das Verrasten
- mittels mindestens eine Oberflächenstruktur (213a, 213b) an einer Innenseite des Mitnahmebechers (210) und/oder
- unter Geräuschentwicklung
erfolgt.

8. Rotationswerkzeugeinrichtung gemäß einem der Ansprüche 6 oder 7, wobei an einer Wand des Mitnahmebechers in dessen Innerem mindestens zwei Mitnahmestrukturen (212a, 212b) angeordnet sind, die entlang einer Helix verlaufen und dazu eingerichtet sind, mindestens bereichsweise an den mindestens zwei Mitnehmerflügeln (111a, 111b, 111c) der gemäß Anspruch 2 ausgebildeten Kupplungswelle anzuliegen.

9. Gefäß-Werkzeug-Kombination (1) für eine Küchenmaschine, wobei die Gefäß-Werkzeug-Kombination ein Gefäß (300), eine darin einsetzbare oder eingesetzte Kupplungswelle (100) nach einem der Ansprüche 1 bis 5 sowie mindestens eine Rotationswerkzeugeinrichtung (200) gemäß einem der Ansprüche 6 bis 8 umfasst, die dazu eingerichtet ist, mittels der Kupplungswelle (100) rotiert zu werden.

10. Küchenmaschine mit einer Basisstation und einer Gefäß-Werkzeug-Kombination (1) gemäß Anspruch 9, deren Kupplungswelle (100) durch einen von der Basisstation umfassten Elektromotor rotierbar ist.

## Claims

1. Coupling shaft (100) for a food processor, wherein the coupling shaft comprises:
- for receiving a rotation, a coupling segment (120) which is designed to be connected to a rotatable coupling facility;
- for transmitting the rotation to at least one rotary tool, an actuator segment (110) with at least two actuator blades (111a, 111b, 111c) and
- a spring ring (130) which is arranged or to be arranged between the coupling segment (120) and the at least two actuator blades (111a, 111b, 111c) and can be compressed radially inwards there counter to its spring force and is designed to engage with a drive cup connected to the rotary tool, **characterised in that** the spring ring (130) consists at least partially of metal.

2. Coupling shaft according to claim 1, wherein a respective radial outer blade edge (Ka, Kb) of the actuator blades runs in each case along a helix winding about an intended axis of rotation (X).

3. Coupling shaft according to claim 1 or 2, wherein a/the respective radial outer blade edge (Ka, Kb) of the at least two actuator blades (111a, 111b, 111c) is inclined by an angle α compared with the intended axis of rotation (X), for which 0 < α ≤ 20° or 5° ≤ α ≤ 13° or even 7° ≤ α ≤ 11° applies.

4. Coupling shaft according to one of the preceding claims, wherein the at least two actuator blades extend in each case from a head region (112) at an end of the coupling shaft opposite to the coupling segment (120) as far as a base region (113) of the actuator segment (110), wherein a diameter D₂ of the head region (112) is smaller than a diameter D₁ of the base region (113).

5. Coupling shaft according to one of the preceding claims, wherein the at least two actuator blades (111a, 111b, 111c) in each case have a front surface in respect of an intended direction of rotation (R), the radial outer edge of which projects at least in regions in the direction of the intended direction of rotation.

6. Rotary tool device (200) for a food processor, wherein the rotary tool device comprises at least one rotary tool (214a, 214b) for processing food and a drive cup (210) for fitting over at least the actuator segment (110) and the spring ring (130) of a coupling shaft (100) according to one of the preceding claims,
wherein the drive cup (210) is designed to transmit a rotation of the actuator segment to the at least one rotary tool (214a, 214b) in a state in which it is fitted over the actuator segment and the spring ring and to engage in a detachable manner with the spring ring (130).

7. Rotary tool device according to claim 6, wherein the engagement
- is carried out by means of at least one surface structure (213a, 213b) on an interior of the drive cup (210) and/or
- generates a noise.

8. Rotary tool device according to one of claims 6 or 7, wherein at least two drive structures (212a, 212b) are arranged on a wall of the drive cup in the interior thereof and run along a helix and are designed to rest at least in regions against the at least two actuator blades (111a, 111b, 111c) of the coupling shaft embodied according to claim 2.

9. Vessel-tool combination (1) for a food processor, wherein the vessel-tool combination comprises a vessel (300), a coupling shaft (100) which is or can be inserted therein according to one of claims 1 to 5 and at least one rotary tool device (200) according to one of claims 6 to 8, which is designed to be rotated by means of the coupling shaft (100).

10. Food processor with a base station and a vessel-tool combination (1) according to claim 9, the coupling shaft (100) of which can be rotated by an electric motor comprised by the base station.

## Revendications

1. Arbre d'accouplement (100) pour un robot culinaire, dans lequel l'arbre d'accouplement comprend :
- afin d'accueillir une rotation, une section d'accouplement (120) conçue afin d'être connectée à un dispositif d'accouplement rotatif ;
- afin de transférer la rotation à au moins un outil rotatif, une section d'entraînement (110) avec au moins deux pales d'entraînement (111a, 111b, 111c) ; et
- une rondelle élastique (130) qui est agencée ou à agencer entre la section d'accouplement (120) et les au moins deux pales d'entraînement (111a, 111b, 111c) et qui peut y être comprimée de manière radiale vers l'intérieur à l'encontre de sa force élastique et qui est conçue afin de s'enclencher avec une coupelle entrainée reliée à l'outil rotatif, **caractérisé en ce que** :
- la rondelle élastique (130) est au moins partiellement en métal.

2. Arbre d'accouplement selon la revendication 1, dans lequel un bord de pale (Ka, Kb) radialement extérieur respectif des pales d'entraînement s'étend respectivement le long d'une hélice enroulée autour d'un axe de rotation (X) prévu.

3. Arbre d'accouplement selon la revendication 1 ou 2, dans lequel un/le bord de pale (Ka, Kb) radialement extérieur respectif des au moins deux pales d'entraînement (111a, 111b, 111c) est incliné d'un angle α par rapport à l'axe de rotation (X) prévu, avec 0 < α ≤ 20° ou 5° ≤ α ≤ 13° ou même 7° ≤ α ≤ 11°.

4. Arbre d'accouplement selon l'une quelconque des revendications précédentes, dans lequel les au moins deux pales d'entraînement s'étendent respectivement à partir d'une région de tête (112) au niveau d'une extrémité de l'arbre d'accouplement opposée à la section d'accouplement (120) jusqu'à une région de socle (113) de la section d'entraînement (110), dans lequel un diamètre D₂ de la région de tête (112) est inférieur à un diamètre D₁ de la région de socle (113).

5. Arbre d'accouplement selon l'une quelconque des revendications précédentes, dans lequel les au moins deux pales d'entraînement (111a, 111b, 111c) présentent respectivement, par rapport à un sens de rotation (R) prévu, une surface antérieure dont le bord radialement extérieur fait saillie au moins par endroits dans la direction du sens de rotation prévu.

6. Dispositif d'outil rotatif (200) pour un robot culinaire, dans lequel le dispositif d'outil rotatif comprend au moins un outil rotatif (214a, 214b) permettant de traiter des aliments ainsi qu'une coupelle entrainée (210) à retourner sur au moins la section d'entraînement (110) et la bague élastique (130) d'un arbre d'accouplement (100) selon l'une quelconque des revendications précédentes,
dans lequel la coupelle entrainée (210) est conçue afin de transmettre une rotation de la section d'entraînement au au moins un outil rotatif (214a, 214b) dans un état retourné sur la section d'entraînement et la bague élastique et afin de s'enclencher de manière amovible avec la bague élastique (130).

7. Dispositif d'outil rotatif selon la revendication 6, dans lequel l'enclenchement intervient
- au moyen d'au moins une structure de surface (213a, 213b) sur une face intérieure de la coupelle entrainée (210) ; et/ou
- avec émission de bruit.

8. Dispositif d'outil rotatif selon la revendication 6 ou 7, dans lequel au moins deux structures entrainées (212a, 212b) sont agencées sur une paroi de la coupelle entrainée à l'intérieur de celle-ci, lesdites structures s'étendant le long d'une hélice et étant conçues afin de s'appuyer au moins par endroits contre les au moins deux pales d'entraînement (111a, 111b, 111c) de l'arbre d'accouplement réalisé selon la revendication 2.

9. Combinaison récipient-outil (1) pour un robot culinaire, dans laquelle la combinaison récipient-outil comprend un récipient (300), un arbre d'accouplement (100) pouvant être inséré ou inséré dans celui-ci selon l'une quelconque des revendications 1 à 5, et au moins un dispositif d'outil rotatif (200) selon l'une quelconque des revendications 6 à 8, qui est conçu afin d'être mis en rotation au moyen de l'arbre d'accouplement (100).

10. Robot culinaire avec une station de base et une combinaison récipient-outil (1) selon la revendication 9, dont l'arbre d'accouplement (100) peut être mis en rotation grâce à un moteur électrique entouré par la station de base.
